# EUROPEAN PATENT APPLICATION

(11) **EP 2 796 192 A2**
(43) Date of publication of application: **29.10.2014**
(21) Application number: 14163593.8
(22) Date of filing: 04.04.2014
(51) Int. Cl.: B01F 7/16, B01D 65/10

(54) **Stirrer cell module and method of using**

(30) Priority: 26.04.2013 US 201313871160
(71) Applicant: Pall Corporation, Port Washington, NY 11050 (US)
(72) Inventor: Pellegrino, Jason S., Plandome, NY New York 11030 (US); Xiao, Lixiang, Huntington Station, NY New York 11476 (US); Morris, Richard, Pensacola, Florida 32256 (US); Hathcock, James J., Forest Hills, NY New York 11375 (US)
(74) Representative: Hoeger, Stellrecht & Partner Patentanwälte

(57) **Abstract**

Baffles 100 useful for stirrer cell modules 1000, stirrer cell modules 1000 including the baffles 100, and methods of using the baffles 100 and modules 1000, are disclosed.

## Description

### BACKGROUND OF THE INVENTION

In view of differences between, for example, types of molecules and various processes, membranes are evaluated to provide a desired balance between selectivity and flux. Stirrer cell modules are used in small scale manufacturing and research, e.g., to preliminarily evaluate membrane candidates for use in desired applications and devices. Typically, the module is in the form of a stirred tank and a membrane is fitted in the bottom. A feed or challenge fluid is introduced into the module, the module is operated, and the flux versus the selectivity is analyzed for each membrane. Based on the results, membranes may be further evaluated, e.g., they can be scaled up and tested using cross-flow or trans-membrane pressure (TMP) conditions, for example, using a tangential flow filtration (TFF) cassette or holder.

However, there is a need for improved stirrer cell modules providing for more accurate and/or predictive results, e.g., results closer to those resulting from those using TFF cassettes or holders. These and other advantages of the present invention will be apparent from the description as set forth below.

### BRIEF SUMMARY OF THE INVENTION

In accordance with embodiments of the invention a stirrer cell module is provided that can be operated to provide efficient membrane testing.

One embodiment of the stirrer cell module comprises (a) a bottom wall including a port; (b) a body comprising an inner wall; (c) a rotatable stirrer comprising a shaft and at least one member projecting from the shaft; and, (d) a baffle comprising an upper surface, a lower surface, at least a central passage, the central passage passing through both the upper and lower surfaces, and a side comprising an outer surface, the outer surface contacting the inner wall of the body, wherein the stirrer shaft passes through the central passage of the baffle and the stirrer member is arranged between the bottom wall and the lower surface of the baffle. In some embodiments, the central passage comprises a passage with a tapered side wall. Alternatively, or additionally, in some embodiments, the baffle can further comprise a plurality of flow passages passing through both the upper and lower surfaces, and the flow passages can comprise perforations and/or fins.

Another embodiment of the stirrer cell module comprises (a) a bottom wall including a port; (b) a body comprising an inner wall; (c) a rotatable stirrer comprising a shaft and at least one member projecting from the shaft; and, (d) a baffle comprising an upper surface, a lower surface, a central passage, a plurality of fluid flow passages, the central passage and the plurality of fluid flow passages passing through both the upper and lower surfaces, and a side comprising an outer surface, the outer surface contacting the inner wall of the body, wherein the stirrer shaft passes through the central passage of the baffle and the stirrer member is arranged between the bottom wall and the lower surface of the baffle. In some embodiments, the fluid flow passages of the baffle comprise perforations and/or fins.

In another embodiment, a method of using a stirrer cell module is provided.

Another embodiment of the invention provides a baffle for use in a stirrer cell module.

### BRIEF DESCRIPTION OF THE SEVERAL VIEWS OF THE DRAWING(S)

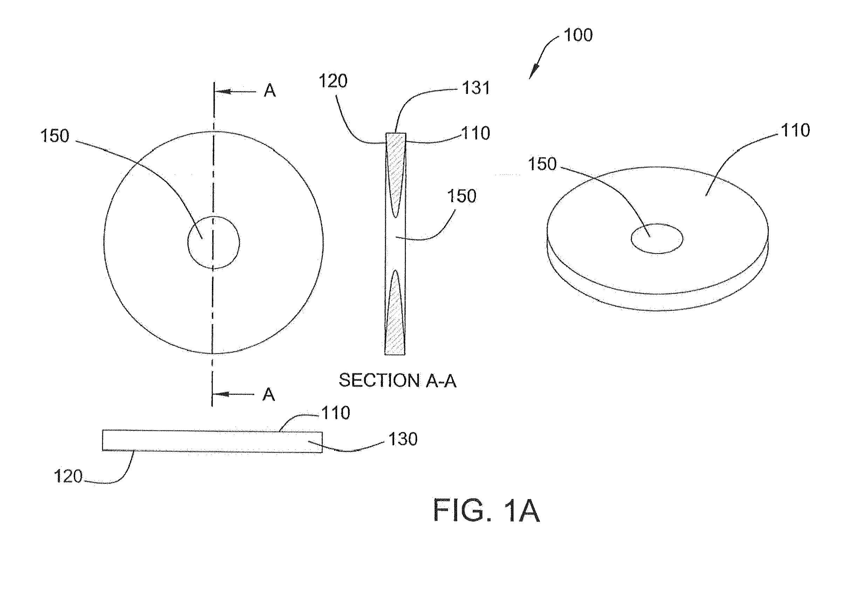

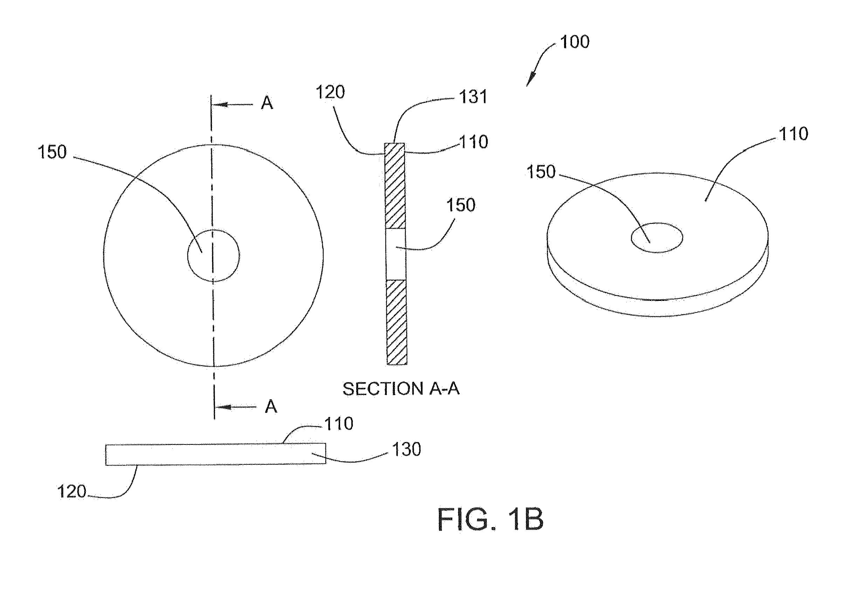

Figure 1 (A-B) shows front, perspective, side, and cross-sectional views of baffles including a central passage, for use in stirrer cell modules according to embodiments of the present invention. Figure 1A shows a central passage with a tapered side wall (shown tapered from the upper surface and from the lower surface), and Figure 1B shows a central passage with a non-tapered (e.g., straight in a vertical cross-sectional view) side wall.

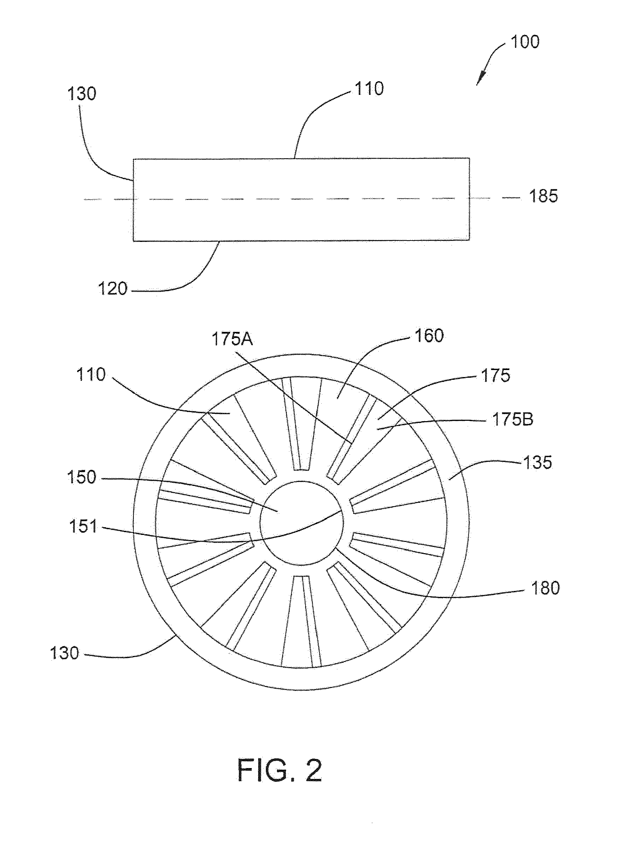

Figure 2 shows front, perspective, and side views of a baffle including a central passage and a plurality of fluid flow passages, for use in a stirrer cell module according to an embodiment of the present invention.

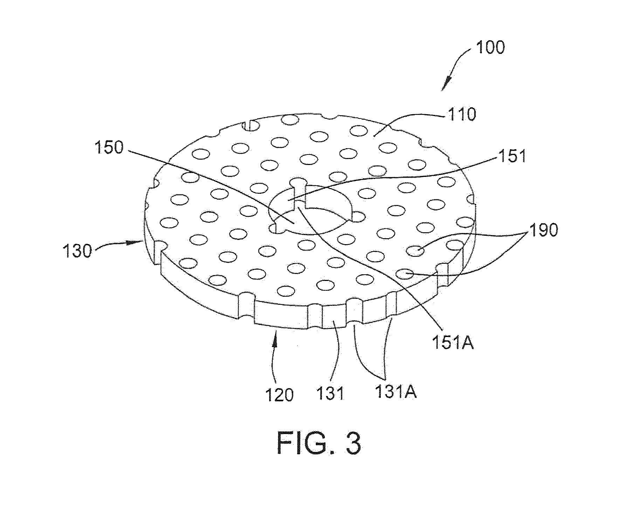

Figure 3 shows a perspective view of another baffle including a central passage and a plurality of fluid flow passages for use in stirrer cell modules according to other embodiments of the present invention.

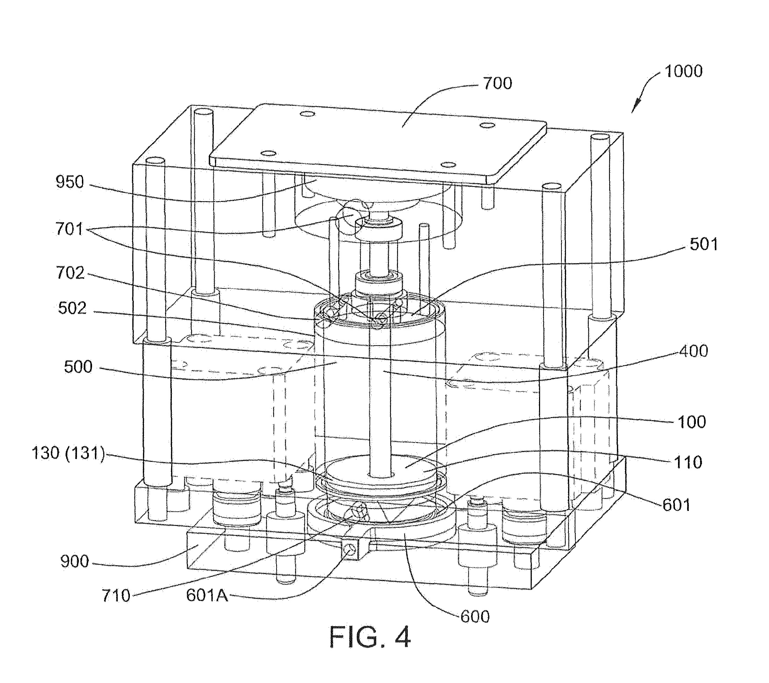

Figure 4 shows an assembled view of a stirrer cell module according to an embodiment of the present invention, including the baffle shown in Figure 1A (membrane not shown), the module comprising a bottom wall including a port; a body comprising an inner wall; a rotatable stirrer comprising a shaft and at least one member projecting from the shaft; and, the baffle, wherein the baffle comprises an upper surface, a lower surface, at least a central passage, the central passage passing through both the upper and lower surfaces, and a side comprising an outer surface, the outer surface of the baffle contacting the inner wall of the body, wherein the stirrer shaft passes through the central passage of the baffle and the stirrer member is arranged between the bottom wall and the lower surface of the baffle.

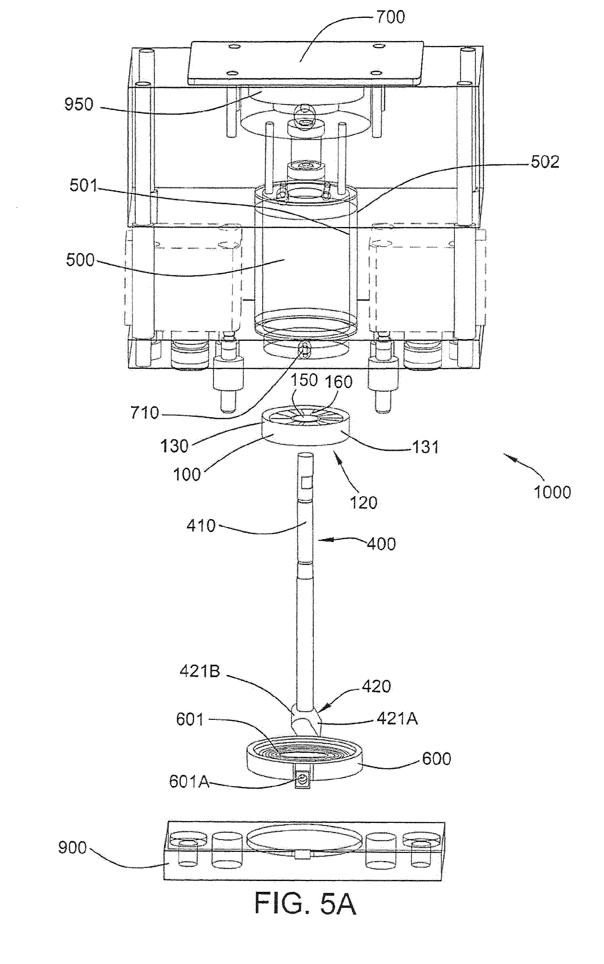

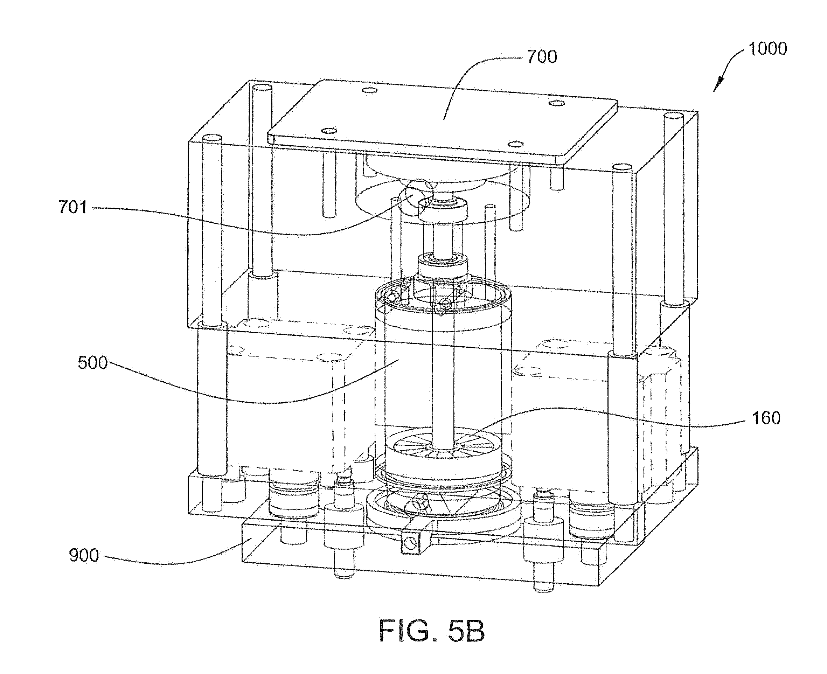

Figure 5 (A-B) shows an exploded view (Figure 5A) and an assembled view (Figure 5B) of a stirrer cell module according to an embodiment of the present invention, including the baffle shown in Figure 2 (membrane not shown), the module comprising a bottom wall including a port; a body comprising an inner wall; a rotatable stirrer comprising a shaft and at least one member projecting from the shaft; and, the baffle, wherein the baffle comprises an upper surface, a lower surface, at least a central passage, the central passage passing through both the upper and lower surfaces, and a side comprising an outer surface. Figure 4B shows the outer surface of the baffle contacting the inner wall of the body, wherein the stirrer shaft passes through the central passage of the baffle and the stirrer member is arranged between the bottom wall and the lower surface of the baffle.

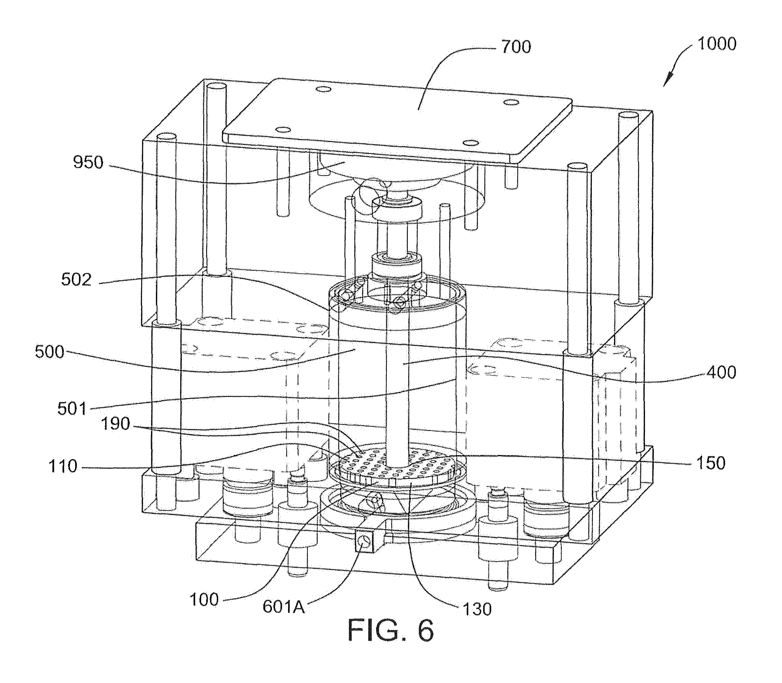

Figure 6 shows an assembled view of a stirrer cell module according to an embodiment of the present invention, including the baffle shown in Figure 3A (membrane not shown), the module comprising a bottom wall including a port; a body comprising an inner wall; a rotatable stirrer comprising a shaft and at least one member projecting from the shaft; and, the baffle, wherein the baffle comprises an upper surface, a lower surface, at least a central passage, the central passage passing through both the upper and lower surfaces, and a side comprising an outer surface, the outer surface of the baffle contacting the inner wall of the body, wherein the stirrer shaft passes through the central passage of the baffle and the stirrer member is arranged between the bottom wall and the lower surface of the baffle.

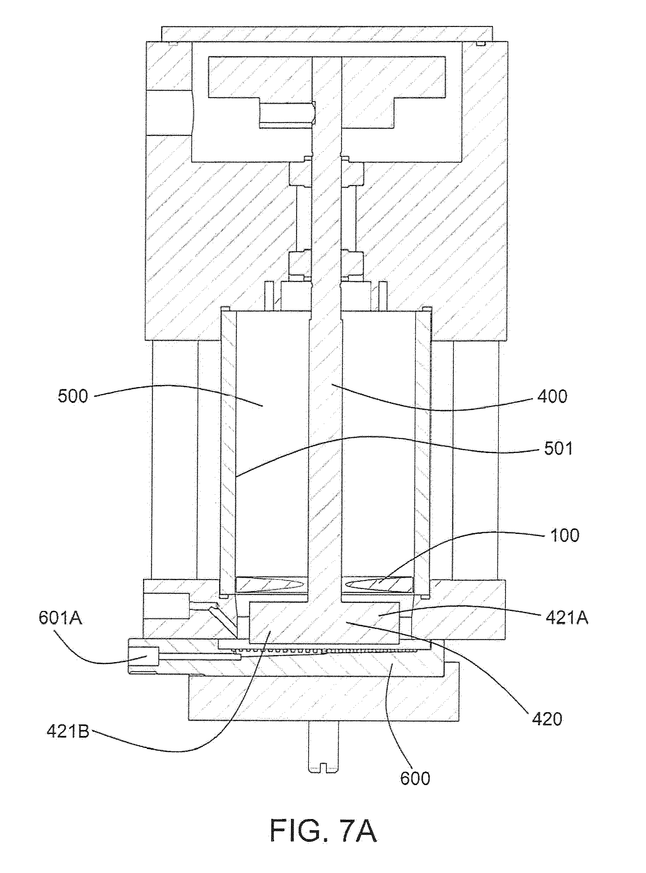

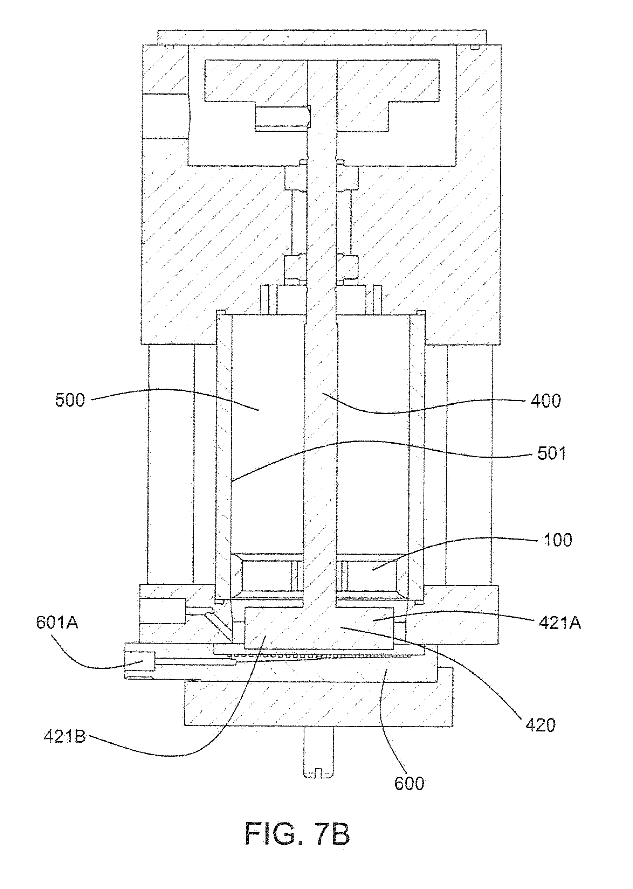

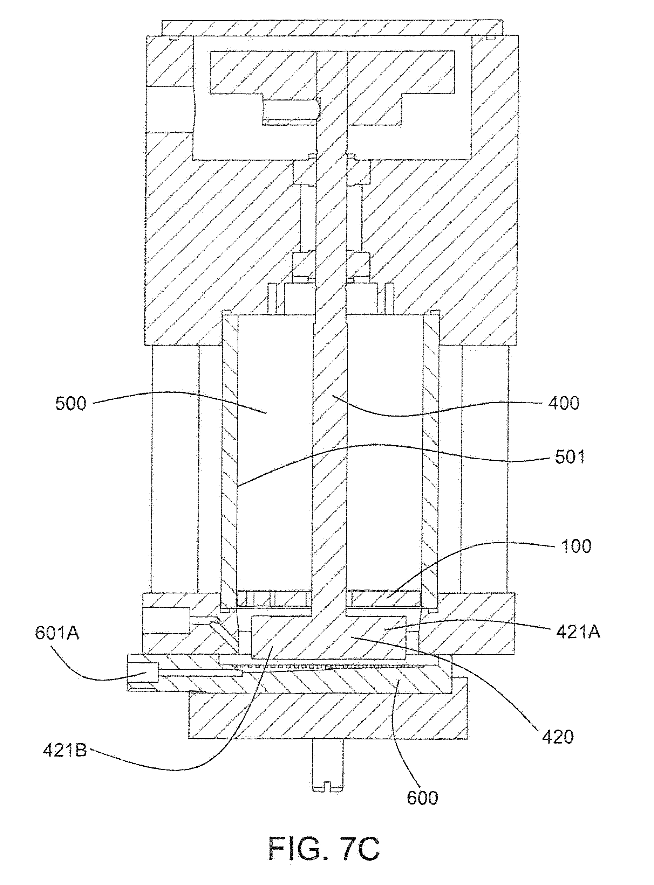

Figure 7 (A-C) shows cross-sectional views of assembled stirrer cell modules according to embodiments of the present invention, including the baffles shown in Figure 1A, 2, and 3A, respectively (membrane not shown).

### DETAILED DESCRIPTION OF THE INVENTION

In accordance with an embodiment of the invention, a stirrer cell module comprises (a) a bottom wall including a port; (b) a body comprising an inner wall; (c) a rotatable stirrer comprising a shaft and at least one member (typically fixed to the shaft) and projecting from the shaft; and, (d) a baffle comprising an upper surface, a lower surface, at least a central passage, the central passage passing through both the upper and lower surfaces, and a side comprising an outer surface, the outer surface contacting the inner wall of the body, wherein the stirrer shaft passes through the central passage of the baffle and the stirrer member is arranged between the bottom wall and the lower surface of the baffle. In some embodiments, the baffle can further comprise a plurality of flow passages passing through both the upper and lower surfaces, and the flow passages can comprise perforations and/or fins.

Another embodiment of the stirrer cell module comprises (a) a bottom wall including a port; (b) a body comprising an inner wall; (c) a rotatable stirrer comprising a shaft and at least one member projecting from the shaft; and, (d) a baffle comprising an upper surface, a lower surface, a central passage, a plurality of fluid flow passages, the central passage and the plurality of fluid flow passages passing through both the upper and lower surfaces, and a side comprising an outer surface, the outer surface contacting the inner wall of the body, wherein the stirrer shaft passes through the central passage of the baffle and the stirrer member is arranged between the bottom wall and the lower surface of the baffle. In some embodiments, the fluid flow passages of the baffle comprise perforations and/or fins.

In some embodiments, the central passage of the baffle comprises a passage with a tapered side wall.

In an embodiment, the baffle comprises a central hub and a plurality of fins attached to the hub. In some embodiments, the central hub has an axis, and the fins are inclined relative to the axis of the central hub. Alternatively, or additionally, in an embodiment, the baffle comprises at least 3 fins.

Methods of using a stirrer cell module are also provided according to the invention. For example, an embodiment of the method comprises introducing a fluid into an embodiment of the stirrer cell module, wherein the stirrer cell module includes a membrane therein, operating the stirrer, obtaining a filtrate passing through the membrane, and analyzing flux versus selectivity for the membrane.

In another embodiment, a method for operating a stirrer cell module is provided, wherein the stirrer cell module comprises a bottom wall including a port; a body comprising an inner wall; a rotatable stirrer comprising a shaft and at least one member projecting from the shaft; a baffle comprising an upper surface, a lower surface, a central passage, the central passage passing through both the upper and lower surfaces, and a side comprising an outer surface, the outer surface contacting the inner wall of the body; and, a membrane having an upstream surface and a downstream surface, the downstream surface contacting the bottom wall, wherein the stirrer shaft passes through the central passage of the baffle and the stirrer member is arranged between the bottom wall and the lower surface of the baffle; the method comprising introducing fluid into the body, rotating the stirrer, and passing fluid through the through the membrane and through the port in the bottom wall. In a preferred embodiment, the method further comprises analyzing flux versus selectivity for the membrane.

In accordance with another embodiment of the present invention, a baffle is provided for use in a stirrer cell module, the baffle comprising a central passage, an upper surface, a lower surface, and an outer surface, wherein the central passage pass through both the upper and lower surfaces. In some embodiments, the central passage comprises a passage with tapered side walls. Alternatively, or additionally, in some embodiments, the baffle can further comprise a plurality of flow passages passing through both the upper and lower surfaces, and the flow passages can comprise perforations and/or fins. Advantageously, embodiments of baffles according to the invention are suitable for use in existing stirrer cell modules, e.g., the modules can be "retrofit" with the baffles.

In accordance with a baffle according to another embodiment of the present invention, the baffle comprising a central passage, fluid flow passages, an upper surface, a lower surface, and an outer surface, wherein the central and fluid flow passages pass through both the upper and lower surfaces. In some embodiments of the baffle, the fluid flow passages comprise perforations and/or fins.

Advantageously, baffles (and stirrer cell modules including baffles), according to the invention can be effectively operated. Without being limited to any particular mechanism, it is believed that the baffle impedes the momentum transfer towards the upper fluid layers, enabling stirring at higher revolutions per minute and higher flux. It is also believed that by preventing momentum transfer away from the membrane surface, the baffle traps the kinetic energy (turbulence/pressure) imparted by the stirrer near the surface of the membrane, which enhances the transport of the retained solute away from the active filtration site and reduces concentration polarization. It is believed that this permits higher transmembrane flux conditions that are more representative of tangential flow filtration (TFF), without the artifacts that might otherwise be introduced by high flux conditions without the enhanced mixing. Additional advantages include the requirement for less challenge solution (e.g., the need for additional challenge solution is reduced or eliminated), reduced testing time and cost. Alternatively, or additionally, testing is carried out more efficiently, e.g., the results are more predictive, resulting in weeding out less desirable membrane candidates before subsequent scale up testing, further reducing the overall test time and cost.

In some embodiments, the use of baffles reduces vortex formation.

Each of the components of the invention will now be described in more detail below, wherein like components have like reference numbers.

In the embodiments illustrated in Figures 1-3, a baffle 100 comprises a central passage 150, an upper surface 110, a lower surface 120, and a side 130 comprising an outer surface 131, wherein the central passage passes through both the upper and lower surfaces.

In the embodiments illustrated in Figures 2 and 3, the baffle 100 further comprises a plurality of fluid flow passages 160, wherein the fluid flow passages pass through both the upper and lower surfaces of the baffle. In some embodiments, it is believed that the flow passages allow for drainage and reduced air entrapment.

In the embodiments shown in Figure 2, the illustrated baffle includes axially arranged fins 175, fluid flow passages 160 comprising non-spherical openings, a central hub 180 having an axis 185, and an outer ring 135 including the outer surface 131, wherein the fins are interposed between, and connected to, the central hub and the outer ring. The fins are preferably inclined relative to the axis of the central hub, and comprise a first edge 175A and a second edge 175B. In some embodiments (not shown), the fins include a curve between the first and second edges.

In the embodiments shown in Figure 3, the illustrated baffle 100 includes fluid flow passages 160 comprising spherical holes or perforations 190.

A variety of baffle configurations are suitable for use in the invention. In those embodiments wherein the fluid flow passages 160 comprise spherical or generally spherical openings (e.g., perforations 190), as shown in Figure 3, for example, the central passage 150 (for a stirrer shaft) has a larger inner diameter than the individual diameters of the fluid flow passages 160. Additionally, or alternatively, the fluid flow passages can have similar or identical inner diameters or open areas compared to each other, or they can be varied.

In the embodiment illustrated in Figures 1A-1B, 2, 4, and 5, the outer surface 131 of the baffles are continuous, having outer diameters providing an interference fit with the inner wall of the body of the stirrer cell module.

However, portions of the outer surface 131 can be cut away, for example, as shown in Figures 3 and 6 (e.g., providing a non-continuous outer surface 131A), providing fluid flow passages, while still providing an interference fit with the inner wall of the body of the stirrer cell module.

The central passage 150 can have any suitable configuration such as shape and size (e.g., diameter). Illustratively, the central passage can have a tapered side wall (e.g., as shown in Figure 1A), or a non-tapered (e. g., straight) side wall (e. g., as shown in Figures 1B, 2A-2C, and 3). With respect to a tapered side wall, the side wall is preferably tapered from both the upper and lower surfaces, e.g., as shown in Figure 1A, but can be tapered from only the upper or the lower surface. Typically, the central passage has a diameter in the range of from about 5 mm to about 30 mm, preferably, the central passage has a diameter of about 25 mm or less. However, the central passage can have a larger or small diameter.

Additionally, or alternatively, while the illustrated embodiments show central passages 150 each comprising a spherical or generally spherical opening, the passage can have a non-spherical opening, e.g., a triangular, rectangular, square, or other shape opening. Additionally, the opening can have a continuous inner surface 151 (e.g., as shown in Figures 1A-1B, 2, 4, and 5) or an inner surface that is cut away (e.g., providing a non-continuous inner surface 151A, as shown in Figures 3 and 6).

In the embodiment of the stirrer cell module illustrated in Figures 4-6 (and with reference to the embodiments of the baffle illustrated in Figures 1-3), a stirrer cell module 1000 comprises a pressure-sealed cover 700, a fluid inlet/outlet port 710, at least one vent 701 (an optional second vent 701 is illustrated), a gas inlet port 702 (for pressurizing the module), a membrane holder 600 comprising a bottom wall 601 including a permeate outlet port 601A, a body 500 comprising a central lumen and including an inner wall 501 and an outer wall 502, a baffle 100 including a central passage 150, an upper surface 110 and a lower surface 120, the central passage passing through both the upper and lower surfaces, the baffle also comprising a side 130 comprising an outer surface 131 in contact with the inner wall 501 of the body 500. In the embodiments illustrated in Figures 5 and 6, the baffle 100 further comprises fluid flow passages 160, wherein the fluid flow passages pass through both the upper and lower surfaces 110, 120.

The illustrated stirrer cell module also comprises a stirrer 400, comprising a shaft 410 and an impeller 420 (in the illustrated embodiment, comprising two projecting members or arms 421A, 42 1 B, extending outwardly from the shaft), wherein the shaft passes through the center hole of the baffle and the impeller is located between the lower surface of the baffle and the bottom wall (e.g., as also shown in Figure 7). Additionally, in the illustrated embodiments, the module includes a moveable support 900 (shown in more detail in Figure 5A), sealably engaging the membrane holder with the body.

In typical preparation for use, the support 900 is lowered, a membrane will be placed on the bottom wall 601 of the membrane holder 600, and the support is raised, sealably engaging the membrane holder with the body.

The module can include additional components, for example, a means for rotating the stirrer such as a magnet or motor 950, one or more bearings (e.g., associated with the motor and/or stirrer), one or more o-rings and/or gaskets, and/or one or more tube fittings and/or ports and/or valves (e.g., for gas pressurization, venting/pressure relief, and permeate).

Stirrer cell modules according to embodiments of the invention can have any suitable capacity, e.g., several milliliters (mL) or more. In some embodiments, the modules have a capacity of several hundred mL, or several thousand mL, or more. Typically, stirrer cell modules according to embodiments of the invention have capacities of about 3 mL to about 600 mL, or more.

A variety of body configurations (as well as configurations for the cover, bottom wall, stirrer, and support) are suitable for use in the invention, and such elements and configurations can be commercially available.

In the illustrated embodiment, the lower end 430 of the stirrer 400 has a generally "T-shaped" appearance, e.g., wherein the stirrer shaft 410 has a vertical axis and the impeller 420 has two members or arms 421a, 421b projecting perpendicular or substantially perpendicular to the vertical axis, and the center of the impeller is mounted to the lower end of the shaft, but the invention is not so limited. Illustratively, the impeller can have three or more arms and/or bent arms and/or the member(s) can project non-parallel or parallel to the vertical axis of the shaft. Additionally, or alternatively, the impeller can be mounted to the shaft at a distance from the lower end of the shaft.

The baffle, body, membrane holder, support, cover, and stirrer can be fabricated from any suitable rigid impervious material, including any impervious thermoplastic material, which is compatible with the fluid(s) being used. For example, the baffle, body, membrane holder, and cover can be fabricated from a polymer, or a metal, such as stainless steel. Typically, the surfaces contacting the stirredr fluids are non-metal for those embodiments wherein solvent resistance is less of a concern, and the surfaces contacting the stirred fluids are metal (e.g., stainless steel) and/or glass (e.g., borosilicate glass) wherein solvent resistance is of interest. In one embodiment, the shaft and impeller are coated with PTFE. In a preferred embodiment, the body and the baffle are each fabricated from a polymer; in some embodiments, the body is a transparent or translucent polymer, such as an acrylic, polypropylene, polystyrene, sulfone, or a polycarbonated resin. A transparent or translucent polymer can be desirable for viewing the contents of the module while the module is operating.

A variety of membranes can be used in accordance with the invention.

The membranes can have any suitable pore structure, e.g., a pore size (for example, as evidenced by bubble point, or by K_{L} as described in, for example, U.S. Patent 4,340,479, or evidenced by capillary condensation flow porometry), a mean flow pore (MFP) size (e.g., when characterized using a porometer, for example, a Porvair Porometer (Porvair plc, Norfolk, UK), or a porometer available under the trademark POROLUX (Porometer.com; Belgium)), a pore rating, a pore diameter (e.g., when characterized using the modified OSU F2 test as described in, for example, U.S. Patent 4,925,572), or a removal rating.

The membranes can have any suitable diameter and effective membrane area. Typically, the membranes have diameters of at least about 25 mm and effective membrane areas of at least about 0.9 cm², more typically, effective membrane areas of at least about 3.5 cm². Other illustrative membrane diameters and effective membrane areas are at least about 45 mm and at least about 11.5 cm²; at least about 64 mm and at least about 27.0 cm²; at least about 76 mm and at least about 38.5 cm²; at least about 90 mm and at least about 54.5 cm²; at least about 150 mm and at least about 162 cm², or more.

The following examples further illustrate the invention but, of course, should not be construed as in any way limiting its scope.

### EXAMPLE 1

This example demonstrates that using a stirrer cell module including a baffle according to an embodiment of the invention provides mixed dextran R90 results more representative of TFF cassette performance than those the results obtained using a stirrer cell module without the baffle.

A tapered solid plastic disc baffle with an 8.9mm central hole (as generally illustrated in Figure 1A) is installed into the stirrer cell module using force fit, locating the baffle about 1 cm over the upstream surface of the membrane, wherein the baffle can be removed for the direct comparison of the baffle's effect. The module has a capacity of about 50 mL. The membranes tested in the module (using a dextran challenge) are about 44.5 mm in diameter and have effective membrane areas of about 13.4 cm². Identical grades of membranes are placed in each container and tested.

Five 44.5 mm discs of Delta Regenerated Cellulose media with a 30kDa nominal molecular weight cut off (Pall Corporation, Port Washington, NY) are tested twice in the same stirrer cell module, once with a baffle and once without baffle. Prior to a first dextran challenge, the discs are rinsed for 24 hours in deionized (DI) water and subsequently flushed of any preservatives by pressurizing 250 mL of fresh DI water through the discs at a pressure of 55 psi. After the first dextran challenge, the discs and stirrer cell module are cleaned with a thorough rinse using DI water followed by a 10 minute cleaning cycle involving 1000 RPM stirring with fresh DI water heated to 40 °C. Each membrane sample was tested twice sequentially and the testing order was alternated with three discs challenged first with the baffle and two discs tested first without the baffle.

The stirrer cell module is operated while regulating a constant permeate flux. The stirrer cell is pressurized to 20 psi with nitrogen and the magnetic stirrer rotated at 1600 RPM using a VWR digital stir plate. The permeate flow is set to 70 liters per square meter per hour (LMH) using a Rainin Precision Peristaltic Pump (Mettler Toledo; Columbus, OH) downstream of the cell modules.

The samples tested without the baffle have higher R90's (17 kDa higher) compared to the same samples tested with the baffle. When the discs are tested with the baffle, an R90 of about 28 kDa is observed; however, when the same discs are tested without the baffle, an R90 of about 45 kDa is measured. The observed difference is found to be statistically significant regardless of the testing order using a paired T-test (p < 0.05).

A stirrer cell module including a baffle is set up and operated as generally described in Example 1, with the exception that the stirrer is rotated at 1000 RPM, and the constant permeate flux is 25 LMH. The R90 is 17 kDa.

A TFF cassette test using the same membrane grade and dextran mix provides an R90 of 16-18 kDa.

Thus, this example demonstrates that using a stirrer cell module including a baffle according to an embodiment of the invention (using different stirring rates and permeate fluxes) provides mixed dextran R90 results more representative of TFF cassette performance than those the results obtained using a stirrer cell module without the baffle.

### EXAMPLE 2

This example demonstrates the reduction in vortex formation using a cell stirrer module including baffles with different diameter central passages.

Stirrer cell modules including baffles as generally shown in Figures 1B and 4 are set up. For comparison, stirrer cell modules without baffles are also set up for each set of experiments.

A 44.5 mm module is used, and the baffles have central diameters of 8.9 mm, 10.2 mm, 11.4 mm, 12.7 mm, and 19.1 mm.

The baffles are plastic plates wedged against the inner wall of a polysulfone cylindrical body. The baffle is located about 1 cm above the surface of the membrane holder. Challenge solution is introduced and the module is pressurized with nitrogen gas at 5 psi (34.5 kPa). The stirrer RPM is confirmed by a stroboscope. Pictures are taken of the vortex heights at different stir speeds, and the vortex heights from the pictures are analyzed using Micrometrics Image Analysis Software by calibrating each image to a reference length.

The results are as shown in the following table 1:

**Table 1**

| Center Hole Size (mm) | Stir RPM | Vortex Height (mm) |
|---|---|---|
| 8.9 | 240 | 0.02 |
| 8.9 | 600 | 0 |
| 8.9 | 1000 | 0.03 |
| 8.9 | 1600 | 0 |
| 10.2 | 240 | 0 |
| 10.2 | 600 | 0 |
| 10.2 | 1000 | 0 |
| 10.2 | 1600 | 1.02 |
| 11.4 | 240 | 0.02 |
| 11.4 | 600 | 0.05 |
| 11.4 | 1000 | 0.3 |
| 11.4 | 1600 | 3.18 |
| 12.7 | 240 | 0.9 |
| 12.7 | 600 | 0.95 |
| 12.7 | 1000 | 3.39 |
| 12.7 | 1600 | 8.31 |
| 19.1 | 240 | 0.29 |
| 19.1 | 600 | 5.81 |
| 19.1 | 1000 | 23.17 |
| 19.1 | 1600 | 30.62 |
| 44.5 (no baffle) | 240 | 2.61 |
| 44.5 (no baffle) | 600 | 26.97 |
| 44.5 (no baffle) | 1000 | 44.29 |
| 44.5 (no baffle) | 1600 | 50.63 |

In another set of experiments, a 63.5 mm module is used, and the baffles have central diameters of 8.9 mm, 12.7 mm, and 19.1 mm.

The results are as shown in the following table 2:

**Table 2**

| Center Hole Size (mm) | Stir RPM | Vortex Height (mm) |
|---|---|---|
| 8.9 | 240 | 0 |
| 8.9 | 600 | 0 |
| 8.9 | 1000 | 0 |
| 12.7 | 600 | 0 |
| 12.7 | 1000 | 0 |
| 12.7 | 1600 | 0.21 |
| 19.1 | 600 | 0 |
| 19.1 | 1000 | 5.07 |
| 19.1 | 1600 | 19.72 |
| 63.5 (no baffle) | 240 | 8.11 |
| 63.5 (no baffle) | 600 | 55.96 |
| 63.5 (no baffle) | 850 | 77.81 |

The example shows that the vortex can be reduced using baffles with central passages, and a variety of central diameters are suitable.

### EXAMPLE 3

This example demonstrates the reduction in vortex formation using a cell stirrer module including baffles with different thicknesses and different numbers of fins.

Stirrer cell modules including baffles as generally shown in Figures 2 and 5 are set up. For comparison, a stirrer cell module without baffles is also set up.

A 44.5 mm module is used, and two sets of baffles are used, one set has a thickness of 3.4 mm and 3, 6, and 10 blades, the other set has a thickness of 6.4 mm and 3, 6, and 10 blades.

The baffles are plastic plates wedged against the inner wall of a polysulfone cylindrical body. The baffle is located about 1 cm above the surface of the membrane holder. Challenge solution is introduced and the module is pressurized with nitrogen gas at 5 psi (34.5 kPa).

The stirrer is rotated at 0, 240, 600, 800 and 1000 RPM.

Pictures are taken of the vortex heights at different stir speeds, and the vortex heights from the pictures are analyzed using Micrometrics Image Analysis Software by calibrating each image to a reference length.

The results are as shown in the following table 3:

**Table 3**

| Thickness (mm) | Number of blades | Stir RPM | Normalized Vortex Height (mm) |
|---|---|---|---|
| 3.4 | 3 | 0 | 0 |
| 3.4 | 3 | 240 | 1.15 |
| 3.4 | 3 | 600 | 9.96 |
| 3.4 | 3 | 800 | 19.69 |
| 3.4 | 3 | 1000 | 24.11 |
| 3.4 | 6 | 0 | 0 |
| 3.4 | 6 | 240 | 1.12 |
| 3.4 | 6 | 600 | 5.76 |
| 3.4 | 6 | 800 | 9.34 |
| 3.4 | 6 | 1000 | 12.51 |
| 3.4 | 10 | 0 | 0 |
| 3.4 | 10 | 240 | 0.72 |
| 3.4 | 10 | 600 | 1.26 |
| 3.4 | 10 | 800 | 1.41 |
| 3.4 | 10 | 1000 | 3.28 |
| 6.4 | 3 | 0 | 0 |
| 6.4 | 3 | 240 | 0.6 |
| 6.4 | 3 | 600 | 6.3 |
| 6.4 | 3 | 800 | 9.24 |
| 6.4 | 3 | 1000 | 12.29 |
| 6.4 | 6 | 0 | 0 |
| 6.4 | 6 | 240 | 0.44 |
| 6.4 | 6 | 600 | 2.93 |
| 6.4 | 6 | 800 | 4.64 |
| 6.4 | 6 | 1000 | 6.58 |
| 6.4 | 10 | 0 | 0 |
| 6.4 | 10 | 240 | 0.12 |
| 6.4 | 10 | 600 | 2.71 |
| 6.4 | 10 | 800 | 6.13 |
| 6.4 | 10 | 1000 | 7.85 |
| no baffle | no baffle | 0 | 0 |
| no baffle | no baffle | 240 | 2.86 |
| no baffle | no baffle | 600 | 26.42 |
| no baffle | no baffle | 800 | 33.55 |
| no baffle | no baffle | 1000 | 42.23 |

The example shows that the vortex can be reduced using a baffle with fins, and a variety of number of blades and baffle thicknesses are suitable.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A stirrer cell module comprising
(a) a bottom wall including a port;
(b) a body comprising an inner wall;
(c) a rotatable stirrer comprising a shaft and at least one member proj ecting from the shaft; and,
(d) a baffle comprising an upper surface, a lower surface, a central passage, the central passage passing through both the upper and lower surfaces, and a side comprising an outer surface, the outer surface contacting the inner wall of the body,
wherein the stirrer shaft passes through the central passage of the baffle and the stirrer member is arranged between the bottom wall and the lower surface of the baffle.

2. The stirrer cell module according to claim 1, wherein the baffle further comprises a plurality of fluid flow passages, the plurality of fluid flow passages passing through both the upper and lower surfaces.

3. The stirrer cell module of claim 2, wherein the baffle comprises a central hub and a plurality of fins attached to the hub.

4. The stirrer cell module of claim 2, wherein the baffle comprises a perforated plate.

5. The stirrer cell module of any one of claims 1-4, wherein the central passage comprises a tapered side wall.

6. The stirrer cell module of any one of claims 1-5, wherein the outer surface of the baffle is continuous.

7. The stirrer cell module of any one of claims 1-6, wherein the central passage of the baffle has a continuous inner surface.

8. The stirrer cell module of any one of claims 1-7, further comprising a membrane, wherein the membrane contacts the bottom wall.

9. A method for operating a stirrer cell module, wherein the stirrer cell module comprises a bottom wall including a port; a body comprising an inner wall; a rotatable stirrer comprising a shaft and at least one member projecting from the shaft; a baffle comprising an upper surface, a lower surface, a central passage, the central passage passing through both the upper and lower surfaces, and a side comprising an outer surface, the outer surface contacting the inner wall of the body; and, a membrane having an upstream surface and a downstream surface, the downstream surface contacting the bottom wall, wherein the stirrer shaft passes through the central passage of the baffle and the stirrer member is arranged between the bottom wall and the lower surface of the baffle;
the method comprising introducing fluid into the body, rotating the stirrer, and passing fluid through the through the membrane and through the port in the bottom wall.

10. A method for operating a stirrer cell module, comprising introducing fluid into the body of the stirrer cell module of any one of claims 1-8, operating the stirrer, and passing fluid through the membrane and through the port in the bottom wall.

11. The method of claim 9 or 10, further comprising analyzing flux versus selectivity for the membrane.
